# EUROPÄISCHE PATENTANMELDUNG

(11) **EP 1 519 039 A1**
(43) Veröffentlichungstag der Anmeldung: **30.03.2005**
(21) Anmeldenummer: 03450285.6
(22) Anmeldetag: 23.12.2003
(51) Int. Cl.: F02P 23/04, H01S 3/042, H01S 3/0941

(54) **Gütegeschaltener, gepumpter Festkörperlaser**

(30) Priorität: 23.09.2003 EP 03021446
(71) Anmelder: AVL List GmbH, 8020 Graz (AT)
(72) Erfinder: Winklhofer, Ernst, 8565 St. Johann ob Hohenburg 1 (AT); Franz, Georg, 9500 Villach (AT); Kroupa, Gerhard, 9500 Villach (AT); Mannheim, Volker, 9523 Landskron (AT); Binder, Alfred, 9523 Landskron (AT)
(74) Vertreter: Babeluk, Michael, Dipl.-Ing.

(57) **Zusammenfassung**

Die Erfindung betrifft einen gütegeschalteten, gepumpten Festkörperlaser (L), insbesondere für eine Laser-Zündeinrichtung (1) einer Brennkraftmaschine, mit einer durch Pumpdioden (3) gebildeten gepulsten Pump-Lichtquelle (30), einem in einen Resonator (9) eingebetteten festen Laserkristall (2), einem Güteschalter (4) zur Erhöhung der Leistungsdichte, zumindest einem Auskoppelspiegel (6) und einer Fokussiereinrichtung (7), wobei zur Kühlung des Resonators (9) eine zumindest eine Peltier-Kühlelemente aufweisende Kühleinrichtung (11) vorgesehen ist. Um eine thermische Stabilisierung des Festkörperlasers (L) zu erreichen, ist vorgesehen, dass die Kühleinrichtung (11) mindestens zwei, vorzugsweise drei verschiedene Kühlsysteme (A, B, C) aufweist, wobei Peltier-Kühlelemente (12) dem ersten Kühlsystem (A) zur Kühlung der Pumpdioden (3) zugeordnet sind.

## Beschreibung

Die Erfindung betrifft einen gütegeschalteten, gepumpten Festkörperlaser, insbesondere für eine Laser-Zündeinrichtung einer Brennkraftmaschine, mit einer durch Pumpdioden gebildeten gepulsten Pump-Lichtquelle, einem in einen Resonator eingebetteten festen Laserkristall, einem Güteschalter zur Erhöhung der Leistungsdichte, zumindest einem Auskoppelspiegel und einer Fokussiereinrichtung, wobei zur Kühlung des Resonators eine zumindest eine Peltier-Kühlelemente aufweisende Kühleinrichtung vorgesehen ist.

Gütegeschaltete, gepumpte Festkörperlaser eignen sich insbesondere als Laser-Zündeinrichtung bei Brennkraftmaschinen.

Aus der US 4,416,226 A ist eine Laser-Zündeinrichtung für eine Brennkraftmaschine bekannt, wobei der Resonator des Lasers samt fotooptischer Fokussiereinrichtung in eine Zylinderkopfbohrung so eingeschraubt ist, dass die Zündeinrichtung direkt in den Brennraum einmündet. Die Laser-Zündeinrichtung wendet dabei das Prinzip eines Festkörperlasers mit einer gepulsten Pump-Lichtquelle an. Dies hat den Vorteil, dass mit relativ geringem Energieaufwand hohe Pulsenergien erreicht werden können. Als Pump-Lichtquelle wird dabei eine Blitzlampe verwendet. Zur Erhöhung der Leistungsdichte wird ein aktiv schaltbarer Güteschalter ("Q-Switch") eingesetzt. Beim sogenannten "Q-switching" wird die Energie während des Pumpvorganges des aktiven Mediums in der Laser-Kavität gespeichert und während einer sehr kurzen Emissionszeit freigesetzt. Hieraus resultiert ein extrem energiereicher Laserpuls. Aktiv schaltbare Güteschalter haben aber den Nachteil, dass für die Steuerung ein erheblicher Schaltungsaufwand erforderlich ist, und dass sie für schnelle Impulsfolgen weniger gut geeignet sind. Die fotooptische Einrichtung der bekannten Laserzündvorrichtung weist drei Linsen auf. Zusammen mit dem aktiven Güteschalter und der durch eine Blitzlampe gebildeten Pump-Lichtquelle ergibt sich der gravierendste Nachteil, dass die Einrichtung nicht zur Gänze in einem in einen Zündkerzenschacht einschraubbaren Bauteil untergebracht werden kann. Über die bei gepumpten Festkörperlasern erforderliche Kühlung des Laserkristalls und der Lichtquelle sind der Druckschrift keine Informationen zu entnehmen.

Die US 6,413,077 B1 beschreibt eine Laserzündeinrichtung, bei der mehrere Laser, und zwar ein Anregungslaser und ein Zündlaser zum Einsatz kommen. Mittels eines Güteschalters werden die Pulse des Anregungslasers und des Zündlasers aufsummiert und somit die für eine Zündung erforderliche Energiedichte bereitgestellt. Diese bekannte Zündeinrichtung hat den Nachteil eines sehr hohen konstruktiven Aufwandes und benötigt zu viel Bauraum, um anstelle einer Zündkerze in einer Brennkraftmaschine eingesetzt werden zu können.

Der Einsatz einer Laserzündung anstelle einer Funkenzündung bietet eine Reihe an Vorteilen. Zum einen benötigt der relativ frei wählbare Ort des Zündplasmas keinerlei materielle Struktur, die den Verbrennungsvorgang stören könnte. Weiters lässt die Wahl des Zündortes eine Optimierung des Verbrennungsvorganges zu, gegebenenfalls auch eine Mehrfachzündung. Die hohen Zünddrücke, wie sie bei Gasmotoren auftreten, kommen der Laserzündung entgegen, da die benötigte Pulsenergie bei höheren Drücken abnimmt. Mit der Laserzündung lassen sich noch magere Gemische zünden, wodurch sich sehr niedrige NOₓ-Emissionswerte erzielen lassen.

Aus der Literatur ist es bekannt, dass ein fokussierter Laser auf einen hinreichend kleinen Fokusdurchmesser mit genügend Intensität zu einer Plasmabildung und zu einer lokalen Temperaturerhöhung und somit zu einer Zündung eines explosiven Gemisches führt. Für praktische Gasgemische wird vorwiegend der Lawineneffekt freier Elektronen für die Plasmabildung erklärt. Der Effekt ist dann praktisch unabhängig von der verwendeten Wellenlänge.

In der US 5,673,550 A wird die Zündung von Kraftstofftröpfchen unter Plasmabildung innerhalb des Kraftstoff-Luftnebels mittels eines über eine kohärente Lichtquelle gepulsten Lasers beschrieben.

Es ist bekannt, bei gepumpten Festkörperlasern Pumpdioden einzusetzen. Pumpdioden haben im Vergleich zu Blitzlampen den Vorteil eines höheren Wirkungsgrades. Bei mit Pumpdioden gepumpten Festkörperlasern tritt allerdings das Problem auf, dass die Pumpdioden nur innerhalb eines sehr engen Temperaturbereiches betreibbar sind. Zu hohe Temperaturen würden die Lebensdauer der Pumpdioden drastisch vermindern.

Die US 5,187,714 A beschreibt einen laserdiodengepumpten Festkörperlaser, wobei zur Kühlung eine Peltiereinrichtung vorgesehen ist. Weiters sind mit Peltierelementen gekühlte diodengepumpte Festkörperlaser aus den Veröffentlichungen JP 11-002849 A, JP 10-200177 A, JP 09-232665 A, JP 04-157778 A und JP 03-041787 A bekannt.

Für den Einsatz als Zündeinrichtung in Brennkraftmaschinen ist die Kühlung alleine durch Peltierelemente allerdings nicht ausreichend. Weiters wird die Kühlung noch durch die Forderung erschwert, dass die Laser-Zündeinrichtung möglichst kompakt gebaut und im Zündkerzendom eines Zylinderkopfes einer Brennkraftmaschine untergebracht werden soll.

Aufgabe der Erfindung ist es, einen für den praktischen Einsatz in Brennkraftmaschinen als Laserzündeinrichtung geeigneten, temperaturstabilisierten Festkörperlaser zu schaffen, welcher nur wenig Bauraum beansprucht und welcher mit geringem konstruktiven Aufwand in Brennkraftmaschinen eingesetzt werden kann.

Erfindungsgemäß wird dies dadurch erreicht, die Kühleinrichtung mindestens zwei, vorzugsweise drei verschiedene Kühlsysteme aufweist, wobei Peltier-Kühlelemente dem ersten Kühlsystem zur Kühlung der Pumpdioden zugeordnet sind.

Da die Wellenlänge der Pumpdioden sich mit der Temperatur des Lasersubstrats ändert und der Laserkristall eine nur sehr schmale Absorptionslinie besitzt, müssen die Pumpdioden thermisch stabilisiert werden. Untersuchungen haben gezeigt, dass zumindest zwei, vorzugsweise drei verschiedene Kühlsysteme für eine thermische Stabilisierung des Resonators von Vorteil sind. Da aber die Pumpdioden auf einem wesentlich niedrigeren Temperaturniveau als die Kühlwassertemperatur betrieben werden müssen, ist der Einsatz von thermoelektrischen Kühlelementen (Peltier-Kühlelementen) in diesem Fall erforderlich. Zumindest das erste Kühlsystem weist daher zumindest ein Peltier-Kühlelement auf. Dabei ist vorgesehen, dass zur Kühlung des Laserkristalls und/oder der Pumpdioden der Resonator ein zweites Kühlsystem mit einem inneren Kühlmittelkreislauf aufweist. Vorzugsweise ist vorgesehen, dass die Pumpdioden von einem vorzugsweise konzentrisch zum Laserkristall angeordneten Wärmeverteiler umgeben sind, wobei der Wärmeverteiler vorzugsweise aus Kupfer besteht. Die Wärme des inneren Kreislaufes wird über den Wärmeverteiler an zumindest ein Peltier-Kühlelement abgeleitet. Dabei ist vorgesehen, dass die Pumpdioden von zumindest einer Reihe in Richtung der Achse des Festkörperlasers angeordneten ersten äußeren Kühlkanälen des ersten Kühlmittelkreislaufes umgeben sind, wobei die ersten äußeren Kühlkanäle vorzugsweise im Wärmeverteiler angeordnet sind. Um eine gute Kühlung zu erreichen, ist es besonders günstig, wenn die Peltier-Kühlelemente vorzugsweise konzentrisch zur Achse des Festkörperlasers außen um die Pumpdioden herum angeordnet sind, wobei vorzugsweise der Wärmeverteiler zwischen Pumpdioden und Peltier-Kühlelementen angeordnet ist. Besonders vorteilhaft ist es, wenn zur Wärmeabfuhr vom Peltier-Kühlelement der Resonator zumindest ein einen äußeren Kühlmittelkreislauf definierendes drittes Kühlsystem aufweist. Die Peltier-Kühlelemente sind dabei von einem Wärmetauscher des dritten Kühlsystems mit in Richtung der Achse des Festkörperlasers angeordneten zweiten Kühlkanälen umgeben. Für zumindest ein Kühlsystem, und zwar das den äußeren Kühlmittelkreislauf aufweisende dritte Kühlsystem, bietet sich das temperaturgeregelte Kühlwasser der Brennkraftmaschine an. Für den inneren Kühlkreislauf ist das Kühlwasser der Brennkraftmaschine aber nicht geeignet, da bei der Wellenlänge der Pumpstrahlung keine Absorption und während der Erwärmung kein Phasenübergang auftreten darf.

Zumindest eines der Kühlsysteme kann dabei auch zum Aufwärmen der Pumpdioden ausgelegt sein. Besonders vorteilhaft ist es, wenn bei Kaltstart die Pumpdioden durch das Peltier-Kühlelement auf die Betriebstemperatur erwärmbar sind.

Der Laserkristall kann prinzipiell entweder aus ND:YAG (Neodym:YAG) oder aus ND:YVO₄ (Neodym:Vanadat) bestehen. ND:YAG ist weit verbreitet, kostengünstig und mechanisch gut belastbar, hat aber eine weit schmälere Absorptionslinie als ND:YVO₄. Der Einsatz von ND:YAG-Laserkristallen bedingt somit eine besonders gute Kühleinrichtung.

Eine sehr effektive Wärmeabfuhr aus dem Laserkristall wird erreicht, wenn der Laserkristall von zumindest einem vorzugsweise ringförmigen ersten inneren Kühlkanal des inneren Kühlmittelkreislaufes umgeben ist.

Pump-Lichtquelle, Resonator samt Laserkristall, Güteschalter, Auskoppelspiegel, Fokussiereinrichtung, sowie die Kühleinrichtung zur Kühlung des Resonators sind vorzugsweise in einem einzigen, in einen Zündkerzenschacht einsetzbaren Bauteil integriert.

Durch die Verwendung eines gütegeschalteten, gepumpten Festkörperlasers können hohe Pulsenergien erreicht werden. Die wesentlichsten Elemente sind kompakt in einem einzigen Bauteil zusammengefasst, welcher sich anstelle einer Zündkerze in den Zündkerzenschacht einer Brennkraftmaschine einschrauben lässt.

Die Laserdioden werden dabei mit einer Pulsenergie von einigen mJ und etwa 100-200µs gepulst betrieben, wodurch die Leistung pro Diode auf einige 10W beschränkt bleibt.

Hochleistungslaserdioden bestehen aus einem Array von vielen Einzeldioden und erreichen dadurch eine sehr hohe Pulsenergie. Durch die große Emissionsfläche und die nicht kontinuierliche Verteilung (geringe Güte) kann der Laserstrahl allerdings nur sehr schlecht fokussiert werden. Durch den langen Resonator kann mit einem Festkörperlaser eine wesentlich höhere Strahlgüte und damit geringerer Fokusdurchmesser erreicht werden.

Der gepulste Festkörperlaser ist aus den vier Hauptkomponenten Pumpdioden, Kristallstab, Resonator mit Auskoppelspiegel, Güteschalter (Q-Switch) und Fokussiereinrichtung aufgebaut. Über die Einstrahlung der Pumpdioden werden metastabile Energieniveaus im Laserkristall angeregt und die Energie damit gespeichert. Aufgrund einer geringen spontanen Emission beginnt der Laserkristall Licht auf der Laserwellenlänge (1064nm) zu emittieren.

Zur Verstärkung und Kohärenz des Lichtes ist der Laserkristall in einen optischen Resonator eingebettet, dessen Güte mit dem Güteschalter bei Erreichen der gewünschten Leistungsdichte pulsartig erhöht wird. Dadurch erhält man am Auskoppelspiegel einen kurzen, hohen Laserpuls. Es wird dabei ein passiver Güteschalter verwendet, welcher einerseits eine hohe Verstärkung, andererseits kurze Energieimpulse ohne aufwändige Steuerung ermöglicht.

Die Geometrie des Resonators ergibt sich aus der Forderung, dass die Pumpdioden - für den Einsatz als Laser-Zündeinrichtung - am oberen Ende des Zündkerzenschachts angeordnet sein müssen. Zur Erzielung einer hohen Güte ist ein möglichst großer Abstand zwischen dem Laserkristall und dem Auskoppelspiegel nötig. Daraus ergibt sich die längliche Bauform, wobei sich der Kopfbereich mit Laserkristall an einem Ende und der Auskoppelspiegel am anderen Ende eines Tubus befinden.

An den Auskoppelspiegel schließt die aus einer einzigen Fokuslinse bestehende Fokussiereinrichtung an. Dies ermöglicht eine sehr kleine Bauweise.

Um eine sehr kompakte Bauweise der Zündeinrichtung zu ermöglichen, ist im Rahmen der Erfindung vorgesehen, dass mehrere Pumpdioden konzentrisch um den Laserkristall angeordnet sind, wobei vorzugsweise mindestens drei, besonders vorzugsweise mindestens sechs Pumpdioden gleichmäßig um den Laserkristall herum angeordnet sind. Die Pumpdioden sind dabei vorteilhafter Weise in Serie geschaltet sind. Der Laserkristall wird somit durch die Pumpdioden seitlich, das heißt radial, gepumpt. Zur Erhöhung der Pulsenergie können auch mehrere Ringe von Pumpdioden konzentrisch hintereinander um den Laserkristall herum angeordnet sein.

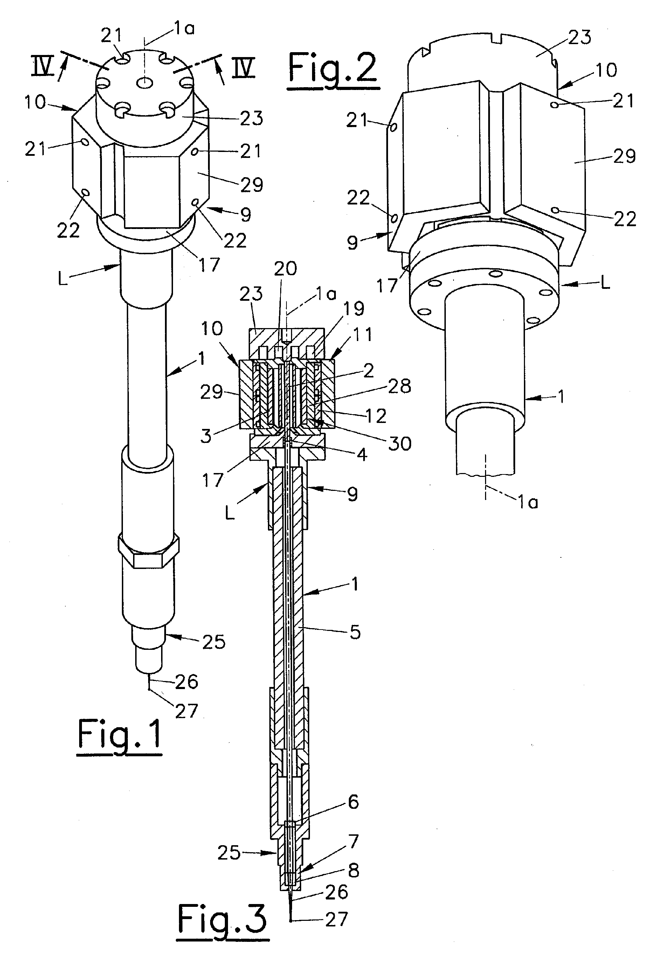

Die Erfindung wird im Folgenden anhand der Figuren näher erläutert. Es zeigen
- Fig. 1: eine Laser-Zündeinrichtung mit einem erfindungsgemäßen Festkörperlaser in einer Schrägansicht,
- Fig. 2: den Kopfteil der Laser-Zündeinrichtung im Detail in einer Schrägansicht,
- Fig. 3: die Laser-Zündeinrichtung in einem Längsschnitt,
- Fig. 4: den Kopfteil der Laser-Zündeinrichtung in einer geschnittenen Schrägansicht gemäß der Linie IV-IV in Fig. 1,
- Fig. 5: den Fußteil der Laser-Zündeinrichtung in einer geschnittenen Schrägansicht,
- Fig. 6: die Laser-Zündeinrichtung schematisch in einem Längsschnitt gemäß der Linie VI-VI in Fig. 7,
- Fig. 7: die Laser-Zündeinrichtung in einem Schnitt gemäß der Linie VII-VII in Fig. 6 und
- Fig. 8: einen Zylinderkopf mit einer eingebauten Laser-Zündeinrichtung.

Der Festkörperlaser L für die Laser-Zündeinrichtung 1 besteht aus den Hauptkomponenten Laserkristall 2, Pumplichtquelle 30, passiver Güteschalter 4, Tubus 5, Auskoppelspiegel 6 und Fokussiereinrichtung 7 mit einer Fokuslinse 8, sowie einer Kühleinrichtung 11.

Ein hoher Wirkungsgrad lässt sich erzielen, wenn die Pumplichtquelle 30 durch Pumpdioden 3 gebildet ist.

Über die Einstrahlung der Pumpdioden 3 (808nm) werden metastabile Energieniveaus im Laserkristall 2 angeregt und die Energie damit gespeichert. Aufgrund einer geringen spontanen Emission beginnt der Laserkristall 2 Licht auf der Laserwellenlänge (1064nm) zu emittieren.

Zur Verstärkung und Kohärenz des Lichts ist der Laserkristall 2 in einen optischen Resonator 9 eingebettet, dessen Güte mit dem passiven Güteschalter 4 bei Erreichen der gewünschten Leistungsdichte pulsartig erhöht wird. Dadurch erhält man am Auskoppelspiegel 6 einen kurzen, starken Laserpuls 26.

Einzelne Pumpdioden 3 sind in Serie geschaltet und ringförmig seitlich um den Laserkristall 2 angeordnet.

Die Pumpdioden 3 müssen aufgrund stark eingeschränkter Lebensdauer bei höherer Betriebstemperatur bei relativ niedriger Temperatur von etwa 30°C betrieben werden. Darüber hinaus ändert sich die Wellenlänge der Pumpdioden 3 mit der Temperatur. Da der aus Neodym:YAG (ND:YAG) bestehende stabförmige Laserkristall 2 eine nur sehr schmale Absorptionslinie besitzt, müssen die Pumpdioden 3 thermisch stabilisiert werden. Dazu ist im Kopfbereich 10 der Laser-Zündeinrichtung 1 die Kühleinrichtung 11 vorgesehen.

Die Kühleinrichtung 11 beinhaltet drei verschiedene Kühlsysteme A, B, C. Das erste Kühlsystem A weist ringförmig um den Wärmeverteiler 28 verteilte Peltier-Kühlelemente 12 auf. Zur besseren Wärmeabfuhr sind weiters die Kühlsysteme B, C mit zwei Flüssigkeits-Kühlkreisläufen 13, 14 vorgesehen. Das Kühlmittel des inneren Kühlkreislaufs 13 durchströmt den Kopfteil 10 im Wesentlichen in Richtung der Achse 1a des Festkörperlasers L.

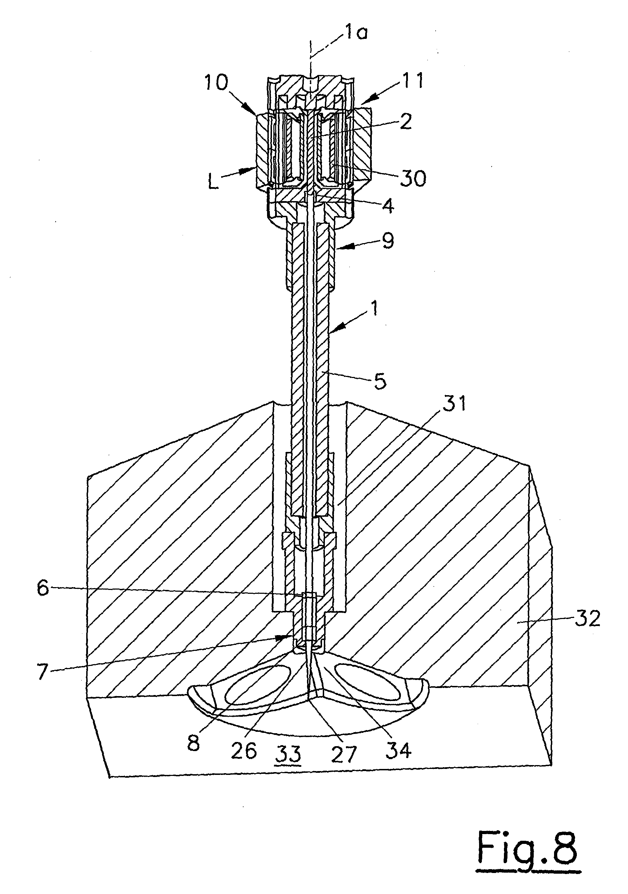

Der innere Kühlkreislauf 13 hat die Aufgabe, den Laserkristall 2 thermisch zu stabilisieren und dessen Verlustwärme an den Wärmeverteiler 28 zu übertragen. Der Laserkristall 2 ist dabei von zumindest einem ersten inneren Kühlkanal 16 umgeben, welcher als Ringkanal ausgebildet sein kann, wie aus Fig. 7 hervorgeht. An Stelle eines Ringkanals können auch mehrere erste innere Kühlkanäle 16 rund um den Laserkristall 2 angeordnet sein. Über zumindest eine Eintrittsöffnung 19a und einen Verteilerringraum 19 wird das Kühlmittel dem ersten inneren Kühlkanal 16 zu-, und über einen Sammelringraum 20 und Austrittsöffnungen 20a wieder abgeführt. Die Verlustwärme des Laserkristalls 2 wird zumindest teilweise beim Durchströmen der Ringräume 19, 20 an die Flanschplatte 17 und die Anschlussplatte 23 übertragen, diese wiederum übertragen die Wärme durch Wärmeleitung an den Wärmeverteiler 28.

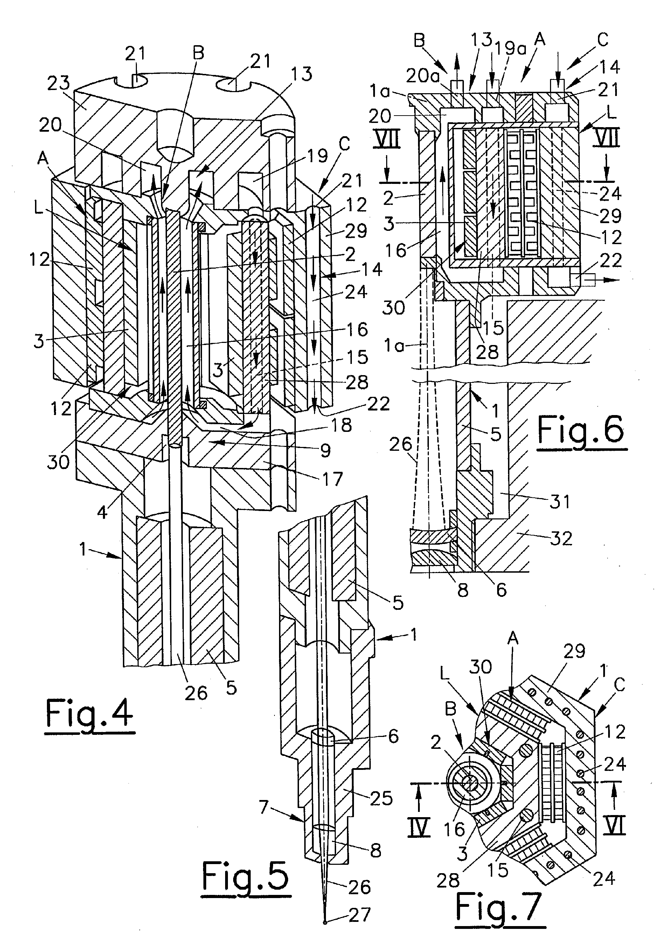

Gegebenenfalls kann auch der Wärmeverteiler 28 axiale zweite innere Kühlkanäle 15 aufweisen, wie in Fig. 4 und Fig. 6 durch strichlierte Linien angedeutet ist. Das Kühlmedium tritt dabei durch Zutrittsöffnungen 19a in den Verteilerringraum 19 ein, durchströmt die zweiten inneren Kühlkanäle 15 des Wärmeverteilers 28 und wird über den Übertrittskanal 18 in den ringförmigen ersten inneren Kühlkanal 16 geleitet. Danach strömt es durch den Sammelringraum 20 und Austrittsöffnungen 20a zu einer externen Pumpe.

Der äußere Kühlkreislauf 14 weist Eintrittsöffnungen 21 im äußeren Wärmetauscher 29 auf, welche zu äußeren Kühlkanälen 24 und weiter zu Austrittsöffnungen 22 führen. Das beispielsweise durch Wasser gebildete Kühlmittel gelangt über die Eintrittsöffnungen 21 in die äußeren Kühlkanäle 24, durchströmt den äußeren Wärmetauscher 29 und verlässt die Laser-Zündeinrichtung 1 wieder im Bereich der Austrittsöffnungen 22. Über die äußeren Kühlkanäle 24 wird also vor allem Wärme aus den Peltier-Kühlelementen 12 über den äußeren Wärmetauscher 29 abgeführt.

Durch die aus drei Kühlsystemen A, B, C - nämlich Peltier-Kühlelemente 12, innerem Kühlkreislauf 13 und äußerem Kühlkreislauf 14 - bestehende Kühleinrichtung 11 ist es möglich, als Material für den Laserkristall 2 das weit verbreitete, kostengünstige und mechanisch gut belastbare Neodym:YAG und als Pumplichtquelle Pumpdioden 3 zu verwenden. Durch die Kühleinrichtung 11 können die Pumpdioden 3 thermisch auf etwa 30°C stabilisiert werden, was sich vorteilhaft auf deren Lebensdauer auswirkt. Andererseits kann durch die thermische Stabilisierung erreicht werden, dass die Wellenlänge der Pumpdioden 3 stets innerhalb der schmalen Absorptionslinie des Laserkristalls 2 bleibt.

Der Laserkristall 2 ist im Bereich der stirnseitigen Anschlussplatte 23 für die Laserwellenlänge (1064nm) verspiegelt und am anderen Ende antireflektierend beschichtet.

Die Form der Laser-Zündeinrichtung 1 ergibt sich aus der Forderung, dass diese anstelle einer Zündkerze in den Zündkerzenschacht 31 eines Zylinderkopfes 32 montierbar sein soll und aus der Randbedingung, dass die Pumpdioden 3 im Kopfbereich 10 der Laser-Zündeinrichtung 1 angeordnet sein müssen. Zur Erzielung einer hohen Strahlgüte ist ein möglichst großer Abstand zwischen dem Laserkristall 2 und dem Auskoppelspiegel 6 nötig. Der Auskoppelspiegel 6 ist daher im Fußbereich 25 der Laser-Zündeinrichtung 1 brennraumnahe angeordnet. Kurz nach dem Auskoppelspiegel 6 befindet sich die Fokussiereinrichtung 7 mit einer einzigen Fokuslinse 8, die gleichzeitig das Fenster zum Brennraum bildet und als plano-spherische Linse ausgebildet ist. Als Material für die Fokussierlinse 8 eignet sich beispielsweise Saphir.

Der äußere Kühlkreislauf 14 kann mit der vorhandenen Wasserkühlung des Motors gekoppelt sein. Für den inneren Kühlkreislauf sind höhere optische, qualitative und thermische Bedingungen zu erfüllen, sodass hier ein eigenes Kühlmittel erforderlich ist.

Die Pumpdioden 3 müssen aufgrund stark eingeschränkter Lebensdauer bei höherer Betriebstemperatur bei etwa 30°C betrieben werden. Der Verlustwärmestrom wird über einen Wärmeverteiler 28, welcher aus Kupfer besteht, an die Peltier-Kühlelemente 12 abgeleitet, die den Wärmestrom auf das Temperaturniveau des Motorkühlwassers transformieren und über den äußeren Wärmetauscher 29 an dieses abgeben.

Da sich die Wellenlänge der Pumpdioden 3 mit der Temperatur verschiebt und das Absorptionsband des Laserkristalls 2 extrem schmal ist, muss eine schnelle und genaue Temperaturregelung vorgesehen sein. Die Temperatur auf der kalten Seite sollte dabei maximal um etwa +/- 1,5°C vom Sollwert abweichen. Um dies zu erreichen, werden die Peltier-Kühlelemente 12 mit mindestens einem Temperatursensor und einer Stromquelle in einem geschlossenen Regelkreis betrieben.

Über die vorzugsweise sechs rund um den Laserkristall 2 angeordneten Pumpdioden 3 werden Lichtimpulse dem Laserkristall 2 zugeführt. Über die Einstrahlung der Pumpdioden 3 (808nm) werden metastabile Energieniveaus im Laserkristall 2 angeregt und die Energie damit gespeichert. Aufgrund einer geringen spontanen Emission beginnt der Laserkristall 2 Licht auf der Laserwellenlänge (1064nm) zu emittieren. Zur Verstärkung und Kohärenz des Lichtes ist der Laserkristall 2 in einen optischen Resonator 9 eingebettet, dessen Güte mit dem passiven Güteschalter 4 (Q-Switch) bei Erreichen der gewünschten Leistungsdichte pulsartig erhöht wird. Dadurch erhält man am Auskoppelspiegel 6 einen hohen, kurzen Laserpuls 26, welcher über die Fokussierlinse 8 in einem Brennpunkt 27 fokussiert wird.

Wie aus Fig. 8 ersichtlich ist, kann die Laser-Zündeinrichtung 1 mit dem erfindungsgemäßen Festkörperlaser L zur Gänze im Zündkerzenschacht 31 eines Zylinderkopfes 32 einer Brennkraftmaschine angeordnet werden. Die Laser-Zündeinrichtung 1 eignet sich somit für den Einsatz in bestehende konventionelle Zylinderkopfkonzepte für fremdgezündete Brennkraftmaschinen. Um Verunreinigungen der Fokussiereinrichtung möglichst gering zuhalten schließt die Fokussierlinse 8 zum Brennraum 33 hin plan an die Zylinderkopfdeckfläche 34 an.

## Patentansprüche

1. Gütegeschalteter, gepumpter Festkörperlaser (L), insbesondere für eine Laser-Zündeinrichtung (1) einer Brennkraftmaschine, mit einer durch Pumpdioden (3) gebildeten gepulsten Pump-Lichtquelle (30), einem in einen Resonator (9) eingebetteten festen Laserkristall (2), einem Güteschalter (4) zur Erhöhung der Leistungsdichte, zumindest einem Auskoppelspiegel (6) und einer Fokussiereinrichtung (7), wobei zur Kühlung des Resonators (9) eine zumindest ein Peltier-Kühlelement (12) aufweisende Kühleinrichtung (11) vorgesehen ist, **dadurch gekennzeichnet, dass** die Kühleinrichtung (11) mindestens zwei, vorzugsweise drei verschiedene Kühlsysteme (A, B, C) aufweist, wobei Peltier-Kühlelemente (12) dem ersten Kühlsystem (A) zur Kühlung der Pumpdioden (3) zugeordnet sind.

2. Festkörperlaser (L) nach Anspruch 1, **dadurch gekennzeichnet, dass** zur Kühlung des Laserkristalls (2) der Resonator (9) einen dem zweiten Kühlsystem (B) zugeordneten inneren Kühlmittelkreislauf (13) aufweist.

3. Festkörperlaser (L) nach Anspruch 1 oder 2, **dadurch gekennzeichnet, dass** zur Wärmeabfuhr vom Peltier-Kühlelement (12) der Resonator (9) zumindest einen dem dritten Kühlmittelsystem (C) zugeordneten äußeren Kühlmittelkreislauf (14) aufweist.

4. Festkörperlaser (L) nach einem der Ansprüche 2 oder 3, **dadurch gekennzeichnet, dass** der Laserkristall (2) von zumindest einem vorzugsweise ringförmigen ersten inneren Kühlkanal (16) des inneren Kühlmittelkreislaufes (13) umgeben ist.

5. Festkörperlaser (L) nach einem der Ansprüche 1 bis 4, **dadurch gekennzeichnet, dass** mehrere Pumpdioden (3) konzentrisch um den Laserkristall (2) angeordnet sind.

6. Festkörperlaser (L) nach Anspruch 5, **dadurch gekennzeichnet, dass** zumindest drei, vorzugsweise zumindest sechs Pumpdioden (3) gleichmäßig um den Laserkristall herum angeordnet sind.

7. Festkörperlaser (L) nach einem der Ansprüche 1 bis 6, **dadurch gekennzeichnet, dass** die Pumpdioden (3) in Serie geschaltet sind.

8. Festkörperlaser (L) nach einem der Ansprüche 1 bis 7, **dadurch gekennzeichnet, dass** die Pumpdioden (3) von einem vorzugsweise konzentrisch zum Laserkristall (2) angeordneten Wärmeverteiler (28) umgeben sind, wobei der Wärmeverteiler (28) vorzugsweise aus Kupfer besteht.

9. Festkörperlaser (L) nach einem der Ansprüche 2 bis 8, **dadurch gekennzeichnet, dass** die Pumpdioden (3) von zumindest einer Reihe in Richtung der Achse (1a) des Festkörperlasers (L) angeordneten ersten äußeren Kühlkanälen (15) des ersten Kühlmittelkreislaufes (13) umgeben sind, wobei die ersten äußeren Kühlkanäle (15) vorzugsweise im Wärmeverteiler (28) angeordnet sind.

10. Festkörperlaser (L) nach einem der Ansprüche 1 bis 9, **dadurch gekennzeichnet, dass** die Peltier-Kühlelemente (12) vorzugsweise konzentrisch zur Achse (1a) außen um die Pumpdioden (3) herum angeordnet sind, wobei vorzugsweise der Wärmeverteiler (28) zwischen Pumpdioden (3) und Peltier-Kühlelementen (12) angeordnet sind.

11. Festkörperlaser (L) nach einem der Ansprüche 1 bis 10, **dadurch gekennzeichnet, dass** die Peltier-Kühlelemente (12) von einem vorzugsweise konzentrisch zur Achse (1a) des Festkörperlasers (L) angeordneten Wärmetauscher (29) des dritten Kühlsystems (C) umgeben sind.

12. Festkörperlaser (L) nach Anspruch 11, **dadurch gekennzeichnet, dass** der Wärmetauscher (29) zumindest eine Reihe von im Wesentlichen konzentrisch um die und in Richtung der Achse (1a) des Festkörperlasers (L) angeordnete zweiten Kühlkanäle aufweist.

13. Festkörperlaser (L) nach einem der Ansprüche 1 bis 12, **dadurch gekennzeichnet, dass** zumindest der innere Kühlmittelkreislauf (13) von einem für die Laserwellenlänge optisch durchlässigen Medium durchströmt wird.

14. Festkörperlaser (L) nach einem der Ansprüche 1 bis 13, **dadurch gekennzeichnet, dass** der äußere Kühlmittelkreislauf (14) mit dem Kühlmittelkreislauf einer Brennkraftmaschine verbunden ist.

15. Festkörperlaser (L) nach einem der Ansprüche 1 bis 14, **dadurch gekennzeichnet, dass** bei Kaltstart die Pumpdioden (3) durch das Peltier-Kühlelement (12) auf die Betriebstemperatur erwärmbar sind.

16. Festkörperlaser (L) nach einem der Ansprüche 1 bis 15, **dadurch gekennzeichnet, dass** der Güteschalter (4) passiv ausgebildet ist.

17. Festkörperlaser (L) nach einem der Ansprüche 1 bis 16, **dadurch gekennzeichnet, dass** die Fokussiereinrichtung (7) eine einzige Fokussierlinse (8) aufweist.

18. Festkörperlaser (L) nach einem der Ansprüche 1 bis 17, **dadurch gekennzeichnet, dass** Pump-Lichtquelle (30), Resonator (9) samt Laserkristall (2), Güteschalter (4), Auskoppelspiegel (6), Fokussiereinrichtung (7) sowie die Kühleinrichtung (11) zur Kühlung des Resonators (9) in einem einzigen, in einen Zündkerzenschacht (31) einer Brennkraftmaschine einsetzbaren Bauteil integriert sind.
